# EUROPEAN PATENT APPLICATION

(11) **EP 4 752 848 A1**
(43) Date of publication of application: **03.06.2026**
(21) Application number: 24870534.5
(22) Date of filing: 18.09.2024
(51) Int. Cl.: G06V 10/764

(54) **TRANSPARENT OBJECT RECOGNITION METHOD AND APPARATUS, AND COMPUTING DEVICE**

(30) Priority: 25.09.2023 CN 202311250353
(71) Applicant: HUAWEI TECHNOLOGIES CO., LTD., Shenzhen 518129 (CN)
(72) Inventor: LUO, Wentao, Shenzhen, Guangdong 518129 (CN); LI, Xiaosong, Shenzhen, Guangdong 518129 (CN); WANG, Yaoyuan, Shenzhen, Guangdong 518129 (CN); ZHANG, Ziyang, Shenzhen, Guangdong 518129 (CN); ZHOU, Shunbo, Shenzhen, Guangdong 518129 (CN); JIANG, Zhaoyuan, Shenzhen, Guangdong 518129 (CN); ZHANG, Yubo, Shenzhen, Guangdong 518129 (CN)
(74) Representative: Goddar, Heinz J.
(86) International application number: PCT/CN2024/119493
(87) International publication number: WO 2025/066990

(57) **Abstract**

A transparent object recognition method and apparatus, and a compute device are disclosed, and relate to the computer field. The transparent object recognition method includes: obtaining an obstacle in a scanning range; receiving a detection result of the obstacle in a process in which an included angle formed between a light beam emitted by a processing device and a tangent plane of a reference point on the obstacle changes from a first included angle to a second included angle; and determining a transparent object from the obstacle based on the detection result of the obstacle. The first included angle is different from the second included angle, and the reference point is an intersection point of the light beam on the obstacle.

## Description

This application claims priority to Chinese Patent Application No. 202311250353.2, filed with the China National Intellectual Property Administration on September 25, 2023 and entitled "TRANSPARENT OBJECT RECOGNITION METHOD AND APPARATUS, AND COMPUTE DEVICE", which is incorporated herein by reference in its entirety.

### TECHNICAL FIELD

This application relates to the computer field, and in particular, to a transparent object recognition method and apparatus, and a compute device.

### BACKGROUND

Transparent object detection means recognizing a transparent object in an environment. Characterized by high light transmission of the transparent object and refraction and reflection of light in the transparent object, it is difficult for a sensor to capture the transparent object.

Usually, a deep learning (deep learning) model is used to recognize the transparent object in the environment. For example, when the deep learning model is used, a large quantity of images including transparent objects (for example, glass) need to be collected and labeled manually for training the model, to obtain a trained model. The model can recognize the glass in the images. However, using the deep learning model needs a large amount of manual effort to label the images, and the constructed deep learning model is complex, causing low efficiency of recognizing the transparent object by using the deep learning model.

### SUMMARY

This application provides a transparent object recognition method and apparatus, and a compute device, to resolve a problem of low efficiency of recognizing a transparent object in an environment.

According to a first aspect, this application provides a transparent object recognition method. The transparent object recognition method may be applied to a computer system or a processing device that supports the computer system in implementing the transparent object recognition method. For example, the processing device may be a self-driving car, a robot, or an uncrewed aerial vehicle. The transparent object recognition method may include: obtaining an obstacle in a scanning range; receiving a detection result of the obstacle in a process in which an included angle formed between a light beam emitted by the processing device and a tangent plane of a reference point on the obstacle changes from a first included angle to a second included angle; and determining a transparent object from the obstacle based on the detection result of the obstacle. The first included angle is different from the second included angle, and the reference point is an intersection point of the light beam on the obstacle.

In this application, the process in which the included angle changes from the first included angle to the second included angle is a process in which a location of the processing device relative to the obstacle keeps changing. Detection results at different included angles are obtained at different locations, and the detection results at the different included angles indicate an optical property of the obstacle. Therefore, the transparent object may be determined from the obstacle based on the optical property of the obstacle, thereby improving recognition accuracy. In addition, the transparent object can be determined from the obstacle only by obtaining the detection results at the different included angles at the different locations, thereby improving efficiency of recognizing the transparent object.

For example, the light beam emitted by the processing device is a laser beam emitted by a lidar in the processing device.

In a possible implementation, obtaining the obstacle in the scanning range includes: The processing device emits the light beam around, and receives a result of reflecting the light beam by the obstacle, to obtain the detection result. The detection result is compared with a target threshold range. When the detection result is outside the target range, the obstacle in the scanning region is determined.

In a possible implementation, the detection result indicates a point cloud intensity set at a plurality of different included angles. The point cloud intensity set includes a plurality of point cloud intensities, any one of the plurality of point cloud intensities indicates an intensity of reflecting a light beam at an included angle by the reference point on the obstacle, and the included angle is between the first included angle and the second included angle.

In this application, the processing device obtains point cloud intensities of a same reference point on the obstacle at different included angles, so that the optical property of the obstacle can be fully obtained, and whether the obstacle is the transparent object can be accurately determined based on the optical property of the obstacle, thereby improving accuracy of recognizing the transparent object.

In a possible implementation, receiving the detection result of the obstacle includes: The processing device moves according to a movement policy, to sequentially reach a plurality of target locations. At each target location, a light beam emitted by the lidar is irradiated to a reference point on the transparent object, and a light beam reflected by the reference point on the transparent object is received, to obtain a point cloud intensity at an included angle between the light beam emitted by the processing device and the reference point on the transparent object at each target location.

The target location in a process of moving according to the movement policy may be determined based on a granularity set by a user, or the target location is preset on a movement trajectory indicated by the movement policy.

For the movement policy, the following provides two possible examples.

Example 1: The processing device moves around the obstacle. In a process in which the processing device moves around the obstacle, the included angle between the light beam emitted by the processing device and the tangent plane of the reference point changes from the first included angle to the second included angle.

For example, that the processing device moves around the obstacle includes: The processing device moves clockwise around the obstacle, or the processing device moves counterclockwise around the obstacle.

In this application, the processing device moves around the obstacle, to obtain, at different locations, point cloud intensities at the reference point on the obstacle, in other words, obtain point cloud intensities of the reference point at different included angles, so that the optical property of the obstacle is fully determined. The processing device determines the transparent object from the obstacle based on the optical property, so that accuracy of recognizing the transparent object can be improved. In addition, the transparent object can be determined from the obstacle only by obtaining detection results at the different included angles at the different locations, thereby improving efficiency of recognizing the transparent object.

Example 2: The processing device moves along a straight line. In a process in which the processing device moves along the straight line, the included angle between the light beam emitted by the processing device and the tangent plane of the reference point changes from the first included angle to the second included angle. In other words, in the process of moving along the straight line, a direction of the movement along the straight line does not cause intersection with the obstacle.

In this application, the processing device obtains point cloud intensities of the reference point at different included angles in a manner in which the processing device moves along the straight line and the direction of the movement along the straight line does not cause intersection with the obstacle, so that energy consumption of the processing device for obtaining the point cloud intensities of the reference point at the different included angles can be reduced, and accuracy and efficiency of determining the transparent object from the obstacle by the processing device based on the point cloud intensities at the different included angles can be improved.

In a possible implementation, determining the transparent object from the obstacle based on the detection result of the obstacle includes: obtaining a similarity between the point cloud intensity set of the obstacle and a point cloud intensity set of a non-transparent object, and determining an obstacle for which a similarity is less than or equal to a first threshold as the transparent object.

In this application, the processing device determines the transparent object from the obstacle based on the similarity between the point cloud intensity set of the obstacle and the point cloud intensity of the non-transparent object, to distinguish between the transparent object and the non-transparent object based on different optical properties of materials, thereby improving accuracy of recognizing the transparent object.

In a possible implementation, the point cloud intensity set at the plurality of different included angles is a point cloud intensity curve, and the point cloud intensity curve indicates a correspondence between a point cloud intensity and an included angle.

In this application, a similarity between point cloud intensity sets is converted into a similarity between point cloud intensity curves. Because the curve is insensitive to a slight change, determining the similarity based on the point cloud intensity curve achieves better robustness, and consistent results can be generated even if data changes slightly, thereby improving accuracy of recognizing the transparent object.

In a possible implementation, the similarity for the point cloud intensity set indicates a similarity for a property of the point cloud intensity curve, and the property of the point cloud intensity curve includes one or more of a peak value, an average width, and an average gradient. The average width indicates a difference between horizontal coordinates of two points whose vertical coordinates are half of the peak value on the point cloud intensity curve, where the vertical coordinate indicates a point cloud intensity, and the horizontal coordinate indicates an included angle. The average gradient indicates an average value of gradients of a plurality of points on the point cloud intensity curve.

In this application, the peak value, average width, and average gradient features of the point cloud intensity curve represent a shape and a structure of the entire curve. Therefore, when similarity calculation is performed based on the property of the point cloud intensity curve, better robustness is achieved when noise or local interference is processed. In this way, obtained results are consistent, thereby improving stability and accuracy of recognizing the transparent object.

In a possible implementation, the transparent object recognition method further includes: receiving point cloud intensity sets of a plurality of transparent materials entered by the user; obtaining a similarity between a point cloud intensity set of the transparent object and a point cloud intensity set of each of the plurality of transparent materials; and using a transparent material for which a similarity is greater than or equal to a second threshold in a plurality of similarities as a material of the transparent object.

In this application, a similarity between a point cloud intensity set of the transparent object at different incident angles and a point cloud intensity set of one of the plurality of transparent materials at different angles is greater than or equal to a threshold, that is, optical properties (point cloud intensities at the different incident angles) of the transparent object and the transparent material are consistent. Therefore, it is determined that the material of the transparent object is consistent with the transparent material. The material of the transparent object is determined by using prior data (the point cloud intensity sets of the plurality of transparent materials at different angles), to improve processing efficiency of recognizing the transparent object while improving accuracy of recognizing the transparent object. In addition, in comparison with that only the transparent object can be recognized by using a deep learning model, in this application, the material of the transparent object may be further determined based on the prior data, to provide data support for the processing device to avoid the obstacle, and improve an obstacle avoidance success rate.

For example, the point cloud intensity set of the transparent object is clustered with the point cloud intensity sets of the plurality of transparent materials, and a transparent material corresponding to a point cloud intensity set that is in a same cluster as the point cloud intensity set of the transparent object is used as the material of the transparent object. A similarity between point cloud intensity sets in a same cluster is greater than or equal to the second threshold.

In a possible implementation, the transparent object recognition method further includes: obtaining point cloud distance distribution data; generating an occupancy grid map based on the point cloud distance distribution data; and merging the occupancy grid map with a transparent object map to obtain a semantic map. The point cloud distance distribution data indicates a distance between any two locations in the scanning range, the occupancy grid map indicates whether a grid on a map corresponding to the scanning range is occupied by an obstacle, and one grid corresponds to one or more pixels. The transparent object map indicates whether the grid on the map corresponding to the scanning range is occupied by the transparent object, the semantic map indicates whether the grid on the map corresponding to the scanning range is occupied by the obstacle and/or the transparent object, and a mark of the grid indicates the material of the transparent object.

In this application, because the processing device can accurately recognize the transparent object and the material of the transparent object in the scanning region, accuracy of the semantic map constructed based on the transparent object and the material of the transparent object in the scanning region is high. Further, when performing navigation based on the semantic map, the processing device may bypass the transparent object and the non-transparent object, thereby improving security of the processing device during movement.

In a possible implementation, the transparent object recognition method further includes: performing navigation based on the semantic map according to a navigation policy. The navigation policy indicates to bypass an occupied grid on the semantic map.

In this application, because the semantic map records a location of the transparent object, the transparent object in the scanning region can be accurately avoided when navigation is performed based on the semantic map, thereby improving the security of the processing device during movement.

For example, because the semantic map further indicates materials of different transparent objects, corresponding bypass policies may be used for different transparent object materials, thereby further ensuring the security of the processing device during movement.

In a possible implementation, the transparent object recognition method further includes: displaying the semantic map.

In this application, for the user, the user adjusts the processing device based on the visualized semantic map to meet a user requirement. This helps the processing device more accurately perform a transparent object recognition or map construction process.

According to a second aspect, this application further provides a transparent object recognition apparatus. The transparent object recognition apparatus is used in a processing device, and the transparent object recognition apparatus includes modules configured to perform the transparent object recognition method in any one of the first aspect or the optional manners of the first aspect. For example, the transparent object recognition apparatus includes a first obtaining module, a receiving module, and a first determining module. The first obtaining module is configured to obtain an obstacle in a scanning range. The receiving module is configured to receive a detection result of the obstacle in a process in which an included angle formed between a light beam emitted by the processing device and a tangent plane of a reference point on the obstacle changes from a first included angle to a second included angle, where the first included angle is different from the second included angle, and the reference point is an intersection point of the light beam on the obstacle. The first determining module is configured to determine a transparent object from the obstacle based on the detection result of the obstacle.

In a possible implementation, that the included angle formed between the light beam emitted by the processing device and the tangent plane of the reference point on the obstacle changes from the first included angle to the second included angle indicates that the included angle between the light beam emitted by the processing device and the tangent plane of the reference point changes from the first included angle to the second included angle in a process in which the processing device moves around the obstacle.

In a possible implementation, that the processing device moves around the obstacle includes: The processing device moves clockwise around the obstacle, or the processing device moves counterclockwise around the obstacle.

In a possible implementation, that the included angle formed between the light beam emitted by the processing device and the tangent plane of the reference point on the obstacle changes from the first included angle to the second included angle indicates that the included angle between the light beam emitted by the processing device and the tangent plane of the reference point changes from the first included angle to the second included angle in a process in which the processing device moves along a straight line.

In a possible implementation, the detection result indicates a point cloud intensity set at a plurality of different included angles. The point cloud intensity set includes a plurality of point cloud intensities, any one of the plurality of point cloud intensities indicates an intensity of reflecting a light beam at an included angle by the reference point on the obstacle, and the included angle is between the first included angle and the second included angle.

In a possible implementation, the first determining module is specifically configured to: obtain a similarity between the point cloud intensity set of the obstacle and a point cloud intensity set of a non-transparent object, and determine an obstacle for which a similarity is less than or equal to a first threshold as the transparent object.

In a possible implementation, the point cloud intensity set at the plurality of different included angles is a point cloud intensity curve, and the point cloud intensity curve indicates a correspondence between a point cloud intensity and an included angle.

In a possible implementation, the similarity for the point cloud intensity set indicates a similarity for a property of the point cloud intensity curve. The property of the point cloud intensity curve includes one or more of a peak value, an average width, and an average gradient. The average width indicates a difference between horizontal coordinates of two points whose vertical coordinates are half of the peak value on the point cloud intensity curve, where the vertical coordinate indicates a point cloud intensity, and the horizontal coordinate indicates an included angle. The average gradient indicates an average value of gradients of a plurality of points on the point cloud intensity curve.

In a possible implementation, the transparent object recognition apparatus further includes a similarity obtaining module and a second determining module. The similarity obtaining module is configured to indicate to obtain a similarity between a point cloud intensity set of the transparent object and a point cloud intensity set of each of a plurality of transparent materials. The second determining module is configured to use a transparent material for which a similarity is greater than or equal to a second threshold in a plurality of similarities as a material of the transparent object.

In a possible implementation, the transparent object recognition apparatus further includes a second obtaining module, a generation module, and a merging module. The second obtaining module is configured to obtain point cloud distance distribution data, where the point cloud distance distribution data indicates a distance between any two locations in the scanning range. The generation module is configured to generate an occupancy grid map based on the point cloud distance distribution data, where the occupancy grid map indicates whether a grid on a map corresponding to the scanning range is occupied by an obstacle, and one grid corresponds to one or more pixels. The merging module is configured to merge the occupancy grid map with a transparent object map to obtain a semantic map. The transparent object map indicates whether the grid on the map corresponding to the scanning range is occupied by the transparent object, the semantic map indicates whether the grid on the map corresponding to the scanning range is occupied by the obstacle and/or the transparent object, and a mark of the grid indicates the material of the transparent object.

In a possible implementation, the transparent object recognition apparatus further includes a navigation module. The navigation module is configured to perform navigation based on the semantic map according to a navigation policy, where the navigation policy indicates to bypass an occupied grid on the semantic map.

In a possible implementation, the transparent object recognition apparatus further includes a display module. The display module is configured to display the semantic map.

According to a third aspect, this application further provides a chip. The chip includes an interface circuit and a power supply circuit. The interface circuit is configured to obtain an obstacle in a scanning range, and the control circuit is configured to perform the method in any one of the first aspect or the possible implementations of the first aspect.

According to a fourth aspect, this application provides a compute device. The compute device includes a memory and a processor. The memory is configured to store computer instructions. When executing the computer instructions, the processor implements the method in any one of the first aspect or the possible implementations of the first aspect. The compute device may be a self-driving car, a robot, an uncrewed aerial vehicle, or the like.

In a possible implementation, the compute device further includes a lidar and a moving component.

According to a fifth aspect, this application further provides a computer-readable storage medium. The storage medium stores a computer program or instructions. When the computer program or the instructions are executed by a compute device, the method in any one of the first aspect or the optional implementations of the first aspect is implemented.

According to a sixth aspect, this application further provides a computer program product. The computer program product includes a computer program or instructions. When the computer program or the instructions are executed by a compute device, the method in any one of the first aspect or the optional implementations of the first aspect is implemented.

For beneficial effects of the second aspect to the sixth aspect, refer to the descriptions of any one of the first aspect or the implementations of the first aspect. Details are not described herein again.

In this application, the implementations provided in the foregoing aspects may be further combined to provide more implementations.

### BRIEF DESCRIPTION OF DRAWINGS

FIG. 1 is a diagram of real images and labeled masks masks;
FIG. 2 is a diagram of a structure of a deep learning network model;
FIG. 3 is a diagram of recognizing a transparent object by a lidar;
FIG. 4 is a first diagram of an application scenario of a computer system according to this application;
FIG. 5 is a second diagram of an application scenario of a computer system according to this application;
FIG. 6 is a schematic flowchart of a transparent object recognition method according to this application;
FIG. 7 is a diagram of locations of an obstacle and a processing device according to this application;
FIG. 8 is a diagram of movement trajectories of a processing device according to this application;
FIG. 9 is a diagram of point cloud intensity curves of obstacles according to this application;
FIG. 10 is a schematic flowchart of a map construction method according to this application;
FIG. 11 is a first diagram of a structure of a transparent object recognition apparatus according to this application;
FIG. 12 is a second diagram of a structure of a transparent object recognition apparatus according to this application; and
FIG. 13 is a diagram of a structure of a compute device according to this application.

### DESCRIPTION OF EMBODIMENTS

For ease of understanding, technical terms in this application are first described.

A point cloud intensity, also referred to as a radar intensity, is a measurement indicator of an echo intensity of a lidar pulse at a point. The value may reflect a reflection intensity (a reflectivity) or an echo intensity of an object (a point or a point cloud) scanned by a lidar pulse. The point cloud is a three-dimensional spatial data set including a large quantity of discrete points, and each point has coordinate information of the point in three-dimensional space, so that location information of all points in the point cloud can be determined.

Gmapping and Cartographer are both lidar-based map construction and localization algorithms for enabling a device to perform localization and map construction in an environment in real time, to finally obtain a map.

Characterized by high light transmission of a transparent object and refraction and reflection of light in the transparent object, an optical sensor (a camera or a radar) has a field of view limitation on sensing the transparent object, that is, the transparent object is difficult to be recognized in the environment. Further, there may be a large quantity of transparent objects in autonomous driving and robot operation scenarios (shopping malls, office regions, and the like), which can easily lead to accidents and collisions, posing serious safety hazards.

To recognize the transparent object in the environment, the following provides two possible processing solutions.

Processing solution 1: deep learning-based glass detection solution using a camera.

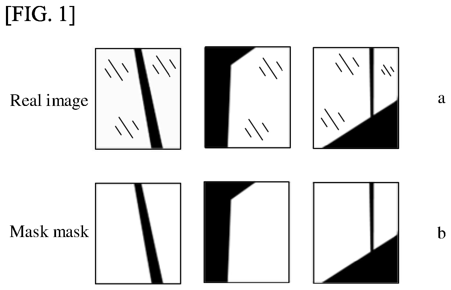

First, a user needs to collect a large quantity of images including glass, and manually label masks masks of the glass. FIG. 1 is a diagram of real images and labeled masks masks. a in FIG. 1 shows various types of real images (glass images) in a shopping mall scenario, and b in FIG. 1 shows masks masks corresponding to various types of glass images. In the masks masks, a white region represents glass, and a black region represents an object excluding the glass.

Further, a deep learning model is trained by using the images including the glass and the corresponding masks masks, so that the model has a capability of recognizing and segmenting the glass.

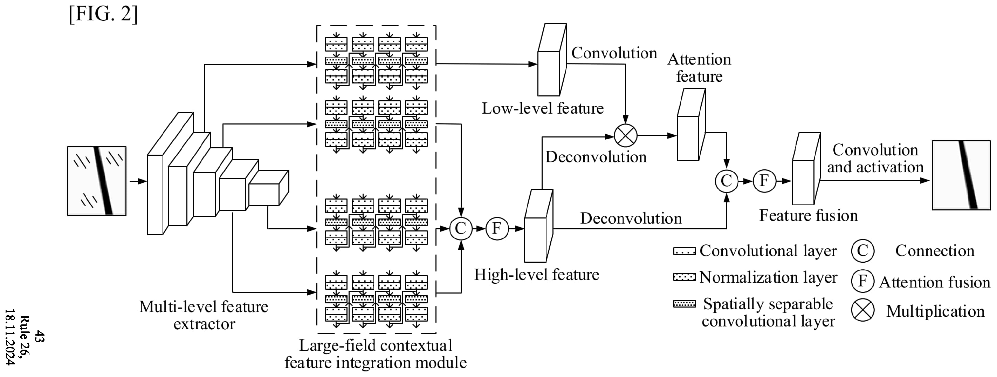

FIG. 2 is a diagram of a structure of a deep learning network model. FIG. 2 is a GDNet (glass detection dataset and design a glass detection network). A structure of the GDNet includes: a multi-level feature extractor, a large-field contextual feature integration (large-field contextual feature integration, LCFI) module, a convolutional layer, a normalization layer, an activation function layer used for activation processing, a spatially separable convolutional layer, and the like. An image including glass is input into the GDNet shown in FIG. 2, to obtain a glass region in the image.

However, to construct a training set (an image including glass and a corresponding mask mask), a large quantity of images need to be manually obtained, causing high costs and low efficiency. In addition, constructing the GDNet structure shown in FIG. 2 is complex, costly, and inefficient.

Processing solution 2: lidar-based glass detection solution.

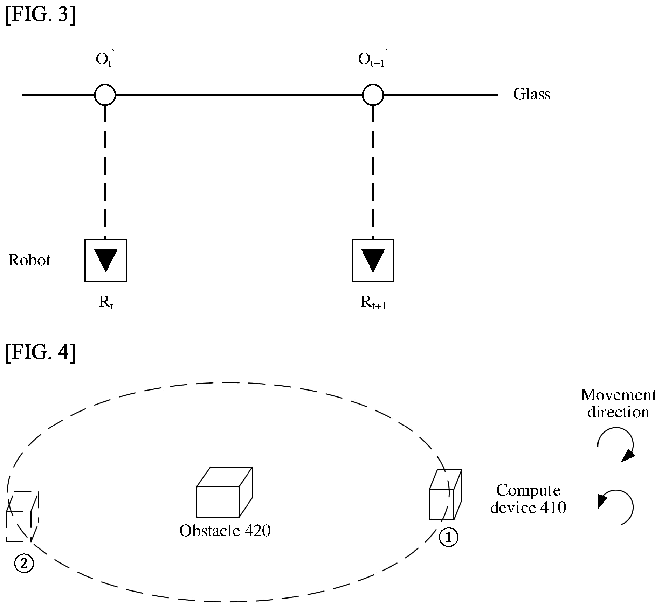

(1) FIG. 3 is a diagram of recognizing a transparent object by a lidar. A point cloud intensity obtained when the lidar is oriented perpendicular to glass is the highest. Further, when a device moves horizontally along the glass, the point cloud intensity keeps the highest (that is, when the device moves from Rₜ to Rₜ₊₁, correspondingly, a point that is on an object and to which a light beam emitted by the device is irradiated moves from Oₜ^{'} to Oₜ₊₁^{'}). When the foregoing case occurs, it is considered that the object is glass.

Because the device cannot determine a placement direction of the object, the device needs to be manually controlled to move, to recognize whether the object is glass or the like. In addition, if a dynamically moving object (for example, an electric door covered with advertisements at an entrance of a shopping mall) appears in a scenario, the object is mistakenly considered as a transparent object because the object keeps moving as the device moves.

(2) A plurality of lidar parameters of a single laser beam irradiated by the lidar to a transparent object are input into a deep learning model, to determine whether the transparent object is glass.

For example, a rotation angle, a tilt angle, a length, and an intensity of the laser beam are input into a glass recognition deep neural network, to recognize a probability of whether a radar point is glass. In addition, in a spatial voxel map including a glass probability and a glass normal vector, a rotation angle and a tilt angle of a laser beam emitted by the lidar when a robot is in an initial posture are simulated by using a ray casting method, and are input into an optical characteristic deep neural network, to obtain a probability of laser beam transmission. A radar point generated by a reflected laser beam is added to a point cloud, to generate a simulated point cloud set. An absolute posture of the robot in the spatial voxel map having the glass probability and glass direction information is calculated through normal distribution transformation based on real three-dimensional radar data and the simulated point cloud set.

Because only the parameters of the single laser beam are input into the deep neural network, there is a limitation in determining whether the object is glass, causing low recognition accuracy. In addition, a large amount of training data needs to be collected for using the deep neural network, and a network structure is complex. Consequently, the deep neural network obtained through training is costly and inefficient.

In conclusion, when the transparent object is recognized in the foregoing processing solutions, overall efficiency is low, and accuracy of determining a material of the transparent object is low.

Based on this, this application provides a transparent object recognition method. The transparent object recognition method is applied to a processing device. The transparent object recognition method includes: obtaining an obstacle in a scanning range; receiving a detection result of the obstacle in a process in which an included angle formed between a light beam emitted by the processing device and a tangent plane of a reference point on the obstacle changes from a first included angle to a second included angle; and determining a transparent object from the obstacle based on the detection result of the obstacle. The first included angle is different from the second included angle, and the reference point is an intersection point of the light beam on the obstacle.

In this application, the process in which the included angle changes from the first included angle to the second included angle means that a location of the processing device relative to the obstacle keeps changing. Detection results at different included angles are obtained at different locations, and the detection results at the different included angles indicate an optical property of the obstacle. Therefore, the transparent object may be determined from the obstacle based on the optical property of the obstacle, thereby improving recognition accuracy. In addition, the transparent object can be determined from the obstacle only by obtaining the detection results at the different included angles at the different locations, thereby improving efficiency of recognizing the transparent object.

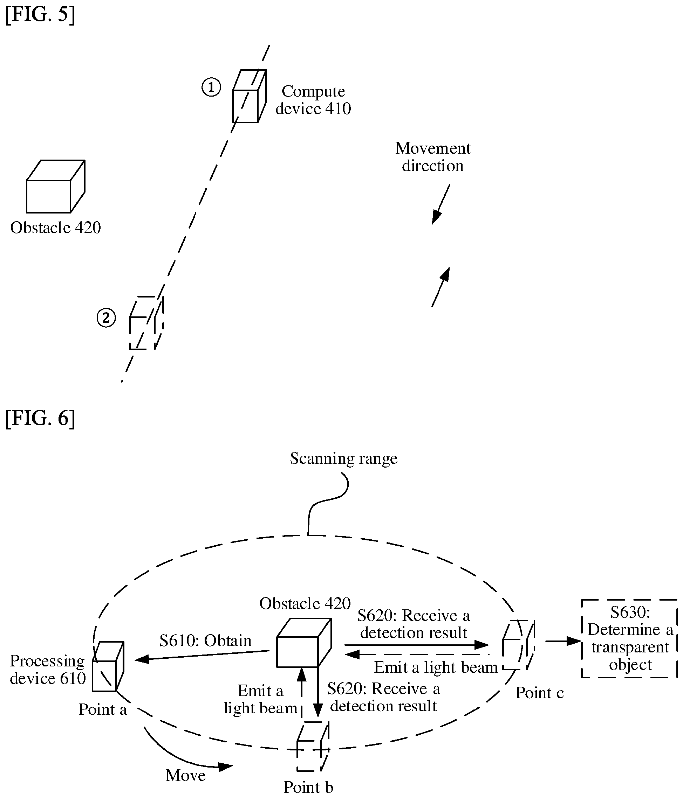

With reference to the accompanying drawings, the following describes in detail the transparent object recognition method provided in this application. The transparent object recognition method provided in this application may be applied to a scenario shown in FIG. 4 or FIG. 5.

In a first scenario, FIG. 4 is a first diagram of an application scenario of a computer system according to this application. A compute device 410 may scan objects in a region, and the region may be referred to as a scanning range. After the compute device 410 recognizes an obstacle 420 in the scanning range of the compute device 410, the compute device 410 may move around the obstacle 420, to obtain detection results at different included angles between a light beam emitted by the compute device 410 and a tangent plane of a reference point on the obstacle 420. Further, a transparent object from the obstacle 420 is determined based on the detection results at the different included angles.

The reference point may be a location randomly selected by the compute device 410 from the obstacle 420, or a location specified by a user on the obstacle 420. In this way, during movement, the compute device 410 keeps emitting light beams to the reference point on the obstacle 420. Alternatively, during movement, the compute device 410 emits a light beam to the reference point on the obstacle 420 each time the compute device 410 reaches a target location. In other words, after the reference point on the obstacle 420 is determined, the reference point is an intersection point, on the obstacle, of the light beam emitted by the compute device 410.

For example, the user may specify a location on a display interface output by the compute device 410. The display interface indicates the obstacle in the scanning region. The user may perform a trigger operation on the display interface. The compute device 410 determines, based on the trigger operation of the user, the location specified by the user on the obstacle. The trigger operation may be a tap/click operation, a slide operation, or the like. The light beam emitted by the compute device 410 may be a laser beam emitted by a lidar deployed in the compute device 410.

The tangent plane of the reference point on the obstacle indicates the following: If a curve that passes through the reference point on an obstacle surface has tangent lines, these tangent lines are in a same plane, and this plane is the tangent plane of the reference point on the obstacle. The tangent line is a straight line that just touches the reference point on the curve. That is, when the tangent line passes through the reference point on the curve, a direction of the tangent line is the same as a direction of the reference point on the curve.

In a possible example, the tangent plane may also be referred to as a tangential surface or a local plane. The tangential surface or the local plane may represent a plane in which a tangent line, if existent, of the curve that passes through the reference point on the obstacle surface is located.

In a possible case, the compute device 410 may move clockwise around the obstacle 420.

For example, the compute device 410 moves clockwise, that is, sequentially passes through a point ① and a point ②, to obtain detection results that are of the compute device 410 between the point ① and the point ② and that are at included angles between the light beam emitted by the compute device 410 and the tangent plane of the reference point on the obstacle 420.

In another possible case, the compute device 410 may move counterclockwise around the obstacle 420.

For example, the compute device 410 moves counterclockwise, that is, sequentially passes through a point ② and a point ①, to obtain detection results that are of the compute device 410 between the point ② and the point ① and that are at included angles between the light beam emitted by the compute device 410 and the tangent plane of the reference point on the obstacle 420.

It should be noted that, as shown in FIG. 4, if the reference point on the obstacle 420 is located on a right side surface of the square-shaped obstacle 420, the tangent plane of the reference point is the right side surface. That the compute device 410 moves around the obstacle 420 may be that the compute device 410 moves around the center of the obstacle 420, or the compute device 410 moves around the reference point. When rotating around the obstacle 420, the compute device 410 only needs to rotate 180° around the tangent plane of the reference point. A rotation angle is not limited in this application. In another embodiment of this application, the rotation angle may be 90°, 120°, or the like. A scope of the scanning range is determined based on a processing capability of the compute device 410, and specifically, is determined based on power, receiving sensitivity, and the like of the lidar in the compute device 410.

In this scenario, the compute device 410 may further construct a map based on the obstacle 420 in the scanning range, and perform navigation based on the obtained map.

In a second scenario, FIG. 5 is a second diagram of an application scenario of a computer system according to this application. After a compute device 410 recognizes an obstacle 420 in a scanning range of the compute device 410, the compute device 410 moves along a straight line, and a direction of the movement along the straight line does not cause intersection with a reference point on the obstacle 420 or the obstacle 420, so that detection results at different included angles between a light beam emitted by the compute device 410 and a tangent plane of the reference point on the obstacle 420 can be obtained. Further, a transparent object from the obstacle 420 is determined based on the detection results at the different included angles.

As shown in FIG. 5, the compute device 410 may move from a point ① to point ② along a straight line, or move from a point ② to a point ① along a straight line. During movement, an included angle between the light beam emitted by the compute device 410 and the tangent plane of the reference point on the obstacle 420 keeps changing, to obtain detection results of the obstacle 420 at different included angles.

This application provides a transparent object recognition method. The transparent object recognition method may be applied to the application scenario shown in FIG. 4 or FIG. 5. The following uses an example in which the transparent object recognition method is applied to the application scenario shown in FIG. 4 for description. FIG. 6 is a schematic flowchart of a transparent object recognition method according to this application. The transparent object recognition method may be performed by a processing device 610. The processing device 610 may include the compute device 410 shown in FIG. 4, and a lidar is disposed in the processing device 610. As shown in FIG. 6, the transparent object recognition method may include the following steps S610 to S630.

S610: The processing device 610 obtains an obstacle 420 in a scanning range.

In a possible implementation, that the processing device 610 obtains the obstacle 420 in the scanning range includes: The processing device 610 emits a light beam, to obtain a detection result of an object in the scanning range, and determines the obstacle 420 in the scanning range based on the detection result of the object.

In a possible example, the processing device 610 keeps emitting light beams to the surrounding of the processing device 610 during normal movement. If the object exists in the scanning range, the processing device 610 receives a result of reflecting the light beam by the object, that is, the detection result. The processing device 610 compares the detection result against a target threshold range, and if the detection result is outside the target threshold range, determines that the object is the obstacle 420 (a suspected transparent object); if the detection result is in the target threshold range, determines that the object is a non-transparent object; or

if the detection result is two end values of the target threshold range, determines that the object is a suspected transparent object or a non-transparent object. This is not limited in this application.

It should be noted that the scanning range shown in FIG. 6 is only a part of a complete scanning range of the processing device 610. In practice, the complete scanning range of the processing device 610 is a region that is radiated around by using a location of the processing device 610 as a center. A range of the region is determined based on power of the lidar in the processing device 610, a blocking condition of a surrounding obstacle, and the like.

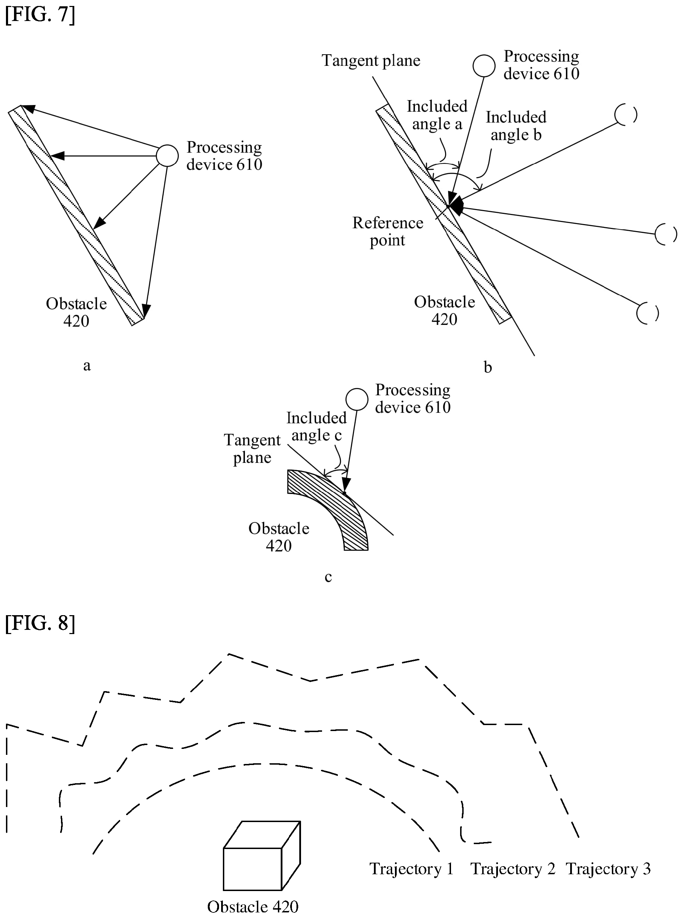

FIG. 7 is a diagram of locations of an obstacle and a processing device according to this application. As shown in a in FIG. 7, when the processing device 610 is at one location, there are a plurality of included angles between the light beam emitted by the processing device 610 and a surface of the object, and detection intensities corresponding to the plurality of included angles are detection intensities of the object. The processing device 610 sequentially compares the detection intensities corresponding to the plurality of included angles against the target threshold range, to determine whether the object is an obstacle.

In a possible case, the processing device 610 may determine detection intensities of the object at a plurality of locations, and determine, based on the detection intensities at the plurality of locations, whether the object is an obstacle.

For example, the light beam emitted by the processing device 610 is a laser beam, and the detection intensity is a point cloud intensity.

In a process of recognizing the obstacle in the scanning range, the processing device 610 further determines a location of the obstacle relative to the processing device 610 based on a point cloud intensity of the obstacle. The relative location is, for example, a distance or an angle between the obstacle and the processing device 610.

Because the point cloud intensity indicates a coordinate location of each point in a point cloud, and the coordinate location is determined based on the processing device 610, the processing device 610 may determine the location of the obstacle relative to the processing device 610 based on the coordinate location of each point.

For example, coordinates of each point in the point cloud are determined by using the processing device 610 that emits the light beam as an origin.

S620: The processing device 610 receives a detection result of the obstacle 420 in a process in which an included angle formed between the light beam emitted by the processing device 610 and a tangent plane of a reference point on the obstacle 420 changes from a first included angle to a second included angle.

The first included angle is different from the second included angle, and the reference point is an intersection point of the light beam on the obstacle.

A difference between the first included angle and the second included angle may be 180°. In another embodiment of this application, the difference may be 90° or 120°. This is not limited in this application. The reference point on the obstacle may be any point to which the light beam emitted by the processing device 610 is irradiated on an outer surface of the obstacle, or the reference point is a location specified by a user on the outer surface of the obstacle.

In a possible implementation, the processing device 610 moves based on a location of the processing device 610 relative to the obstacle 420, where a movement direction does not cause intersection with the obstacle 420, and receives the detection result of the obstacle 420 in the process in which the included angle between the light beam emitted by the processing device 610 and the tangent plane of the reference point on the obstacle 420 changes from the first included angle to the second included angle.

As shown in FIG. 6, the processing device 610 moves from a point a to a point c through a point b. In a process of moving from the point a to the point c, the included angle between the light beam emitted by the processing device and the tangent plane of the reference point on the obstacle 420 keeps changing. That is, in a process of changing from the first included angle to the second included angle, the processing device 610 continuously receives the detection result of the obstacle 420.

Similarly, as shown in b in FIG. 7, the obstacle 420 is of a regular cube structure. Therefore, the tangent plane of the reference point on the obstacle is a plane in which the reference point is located. The processing device 610 sequentially passes through a plurality of points. In a process of passing through the plurality of points, the included angle between the light beam emitted by the processing device 610 and the tangent plane of the reference point on the obstacle 420 keeps changing. For example, the included angle changes from an included angle a to an included angle b, and as the processing device 610 keeps moving, the included angle keeps increasing.

As shown in c in FIG. 7, the obstacle 420 is of an arc structure, and the tangent plane of the reference point on the obstacle 420 is determined based on the reference point on the obstacle 420. In a process in which the processing device 610 moves around the obstacle 420, the included angle between the light beam emitted by the processing device 610 and the tangent plane of the reference point on the obstacle 420 keeps changing. For example, the included angle changes continuously from an included angle c.

It should be noted that, because the obstacle 420 shown in c in FIG. 7 is of the arc structure, the tangent plane of the reference point on the obstacle 420 is perpendicular to a connection line between a center of the arc structure and the reference point.

The detection result indicates a point cloud intensity set at a plurality of different included angles. The point cloud intensity set includes a plurality of point cloud intensities, any one of the plurality of point cloud intensities indicates an intensity of reflecting a light beam at an included angle by the reference point on the obstacle 420, and the included angle is between the first included angle and the second included angle.

For example, during movement of the processing device 610, in a process in which the included angle keeps changing from the first included angle to the second included angle, the processing device 610 keeps emitting light beams, and obtains, at each included angle, a point cloud intensity at the reference point on the obstacle 420. In other words, the point cloud intensity set includes a plurality of groups of included angles and point cloud intensity data, for example, (20°, 60).

In this application, the processing device 610 obtains point cloud intensities of a same reference point on the obstacle 420 at different included angles, so that an optical property of the obstacle 420 can be fully obtained, and whether the obstacle 420 is the transparent object can be accurately determined based on the optical property of the obstacle 420, thereby improving accuracy of recognizing the transparent object.

When the processing device is at a start location (the point a), the included angle between the light beam emitted by the processing device 610 and the tangent plane of the reference point on the obstacle 420 is the first included angle. When the processing device is at an end location (the point b), the included angle between the light beam emitted by the processing device 610 and the tangent plane of the reference point on the obstacle 420 is the second included angle. The start location and the end location are specific for an obstacle. Different obstacles may correspond to different start locations and end locations.

In a possible example, the processing device 610 moves according to a movement policy, and sequentially reaches a plurality of target locations. At each target location, the light beam emitted by the processing device 610 is irradiated to the reference point on the obstacle 420, and a light beam reflected by the reference point on the obstacle 420 is received, to obtain a point cloud intensity that is of the light beam emitted by the processing device 610 at each target location and that is at the reference point on the obstacle 420.

In a process of moving according to the movement policy, the processing device 610 may determine the target location based on a granularity set by the user. For example, a location to which the processing device 610 moves every 10 cm according to the movement policy is the target location. Alternatively, the target location is preset on a movement trajectory indicated by the movement policy. This is not limited in this application.

In a possible case, a plane of a trajectory formed by the movement of the processing device 610 according to the movement policy may be parallel to or at a specific angle to a horizontal plane (for example, when the obstacle is located on a slope, the processing device 610 may move up and down along the slope, and a movement trajectory of the processing device 610 is at a specific angle to the horizontal plane).

For the movement policy, the following provides a possible embodiment.

In a possible embodiment, in a process in which the processing device 610 moves around the obstacle 420, the included angle formed between the light beam emitted by the processing device 610 and the tangent plane of the reference point changes from the first included angle to the second included angle.

As shown in FIG. 4, the processing device 610 moves around the obstacle 420, and each time the processing device 610 moves for a distance, the included angle between the light beam emitted by the processing device 610 and the tangent plane of the reference point on the obstacle 420 changes. The processing device 610 moves from the point ① to the point ②, and the included angle between the light beam emitted by the processing device 610 and the tangent plane of the reference point changes from the first included angle to the second included angle.

In a possible case, the processing device 610 may move clockwise around the obstacle 420, or may move counterclockwise around the obstacle 420. This is not limited in this application.

For example, a shape of a trajectory of the processing device 610 moving around the obstacle 420 may be a curve or a polyline. An opening of the curve or the polyline faces the obstacle 420.

FIG. 8 is a diagram of movement trajectories of a processing device according to this application. In FIG. 8, a trajectory 1 is a circular arc, that is, a curve, a trajectory 2 is an irregular curve, and a trajectory 3 is a polyline. Openings of the trajectory 1, the trajectory 2, and the trajectory 3 all face the obstacle 420.

In this application, the processing device 610 moves around the obstacle 420, to obtain, at different locations, point cloud intensities at the reference point on the obstacle 420, in other words, obtain point cloud intensities of the reference point at different included angles, so that the optical property of the obstacle 420 is fully determined. The processing device 610 determines the transparent object from the obstacle 420 based on the optical property, so that accuracy of recognizing the transparent object can be improved.

S630: The processing device 610 determines the transparent object from the obstacle 420 based on the detection result of the obstacle 420.

In a possible implementation, that the processing device 610 determines the transparent object from the obstacle 420 based on the detection result of the obstacle 420 includes: obtaining a similarity between the point cloud intensity set of the obstacle 420 and a point cloud intensity set of the non-transparent object, and determining the obstacle 420 for which a similarity is less than or equal to a first threshold as the transparent object.

For example, the processing device 610 may determine the similarity between the point cloud intensity sets by using a Euclidean distance, a Manhattan distance, a Chebyshev distance, or the like.

The processing device 610 determines a distance between data by using a Euclidean distance, a Manhattan distance, or a Chebyshev distance, and measures a similarity between the data by using the distance.

For example, the processing device 610 uses the Euclidean distance in the Euclidean distance, the Manhattan distance, and the Chebyshev distance. The processing device 610 calculates, at a same included angle, a distance between a point cloud intensity in the point cloud intensity set of the obstacle 420 and a point cloud intensity in the point cloud intensity set of the non-transparent object by using the Euclidean distance, and then obtains a similarity between the point cloud intensities at the same included angle based on the distance. The processing device 610 performs weighted summation on similarities between corresponding intensities at all included angles, to obtain the similarity between the point cloud intensity sets.

In this application, the processing device 610 determines the transparent object from the obstacle 420 based on the similarity between the point cloud intensity set of the obstacle 420 and the point cloud intensity of the non-transparent object, to distinguish between the transparent object and the non-transparent object based on different optical properties of materials, thereby improving accuracy of recognizing the transparent object.

In another embodiment of this application, an example in which the transparent object recognition method is applied to the application scenario shown in FIG. 5 is used for description. In comparison with the foregoing content shown in FIG. 6, content in this embodiment differs only in that a movement policy used by the processing device 610 in this embodiment is moving along a straight line.

In a possible implementation, in a process in which the processing device 610 moves along the straight line, the included angle formed between the light beam emitted by the processing device and the tangent plane of the reference point changes from the first included angle to the second included angle.

As shown in FIG. 5, the processing device 610 moves in a straight line manner, and a direction of the movement along the straight line does not cause intersection with the obstacle 420, so that each time the processing device 610 moves for a distance, the included angle between the light beam emitted by the processing device 610 and the tangent plane of the reference point on the obstacle 420 changes. The processing device 610 moves from the point ① to the point ②, and the included angle between the light beam emitted by the processing device 610 and the tangent plane of the reference point changes from the first included angle to the second included angle.

In a possible case, when the processing device 610 moves in the straight line manner, the direction of the movement along the straight line does not cause intersection with the reference point on the obstacle 420.

In this application, the processing device 610 obtains point cloud intensities of the reference point at different included angles in a manner in which the processing device 610 moves along the straight line and the direction of the movement along the straight line does not cause intersection with the obstacle 420, so that energy consumption of the processing device 610 for obtaining the point cloud intensities of the reference point at the different included angles can be reduced, and accuracy of determining the transparent object from the obstacle 420 by the processing device 610 based on the point cloud intensities at the different included angles can be improved.

In a possible embodiment, the point cloud intensity set at different included angles is a point cloud intensity curve. The point cloud intensity curve indicates a correspondence between a point cloud intensity and an included angle.

When determining the transparent object from the obstacle 420 based on the detection result of the obstacle 420, the processing device 610 may use a similarity between a point cloud intensity curve of the obstacle 420 and a point cloud intensity curve of the non-transparent object.

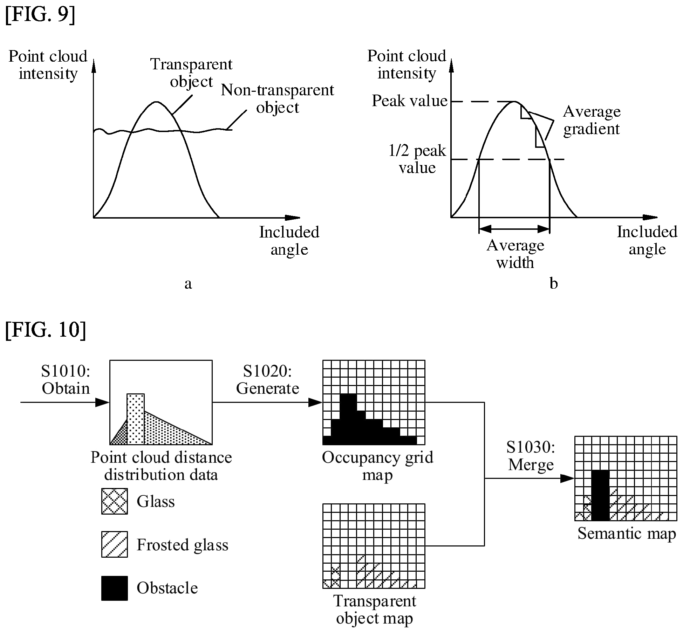

FIG. 9 is a diagram of point cloud intensity curves of obstacles according to this application. a in FIG. 9 shows a point cloud intensity curve of the transparent object and the point cloud intensity curve of the non-transparent object. A point cloud intensity of the transparent object changes in a parabolic shape as the included angle changes. The point cloud intensity reaches a peak value when the light beam of the processing device 610 is at 90° to the tangent plane of the reference point. A point cloud intensity of the non-transparent object fluctuates slightly in a specific range as the included angle changes.

The processing device 610 may determine the similarity between the point cloud intensity curve of the obstacle 420 and the point cloud intensity curve of the non-transparent object by using a Fréchet distance (Fréchet distance), dynamic time warping (dynamic time warping, DTW), or the like.

The Frechet distance is defined as a largest value of the following process. One point on one curve and one point on another curve are selected, and then the two points are connected to form a connection line segment. A location and a length of the connection line segment are restricted by a sequence of points on the two curves. The Fréchet distance is a largest value that makes the connection line segment the shortest in the process. A smaller Fréchet distance identifies that the two curves are more similar.

A basic idea of the DTW is to align two time series (curves) to minimize a distance between the two time series and meet a strict monotonicity and smoothness restriction. Specifically, the DTW is used to calculate a distance matrix between two sequences, and search for an optimal path by using a dynamic planning method, that is, provide a metric for a similarity between the two sequences.

In this application, the processing device 610 converts a similarity between point cloud intensity sets into a similarity between point cloud intensity curves. Because the curve is more sensitive to a slight change, determining the similarity based on the point cloud intensity curve achieves better robustness, and consistent results can be generated even if data changes slightly, thereby improving accuracy of recognizing the transparent object.

In a possible implementation, the similarity for the point cloud intensity set indicates a similarity for a property of the point cloud intensity curve. The property of the point cloud intensity curve includes one or more of a peak value, an average width, and an average gradient.

The average width indicates a difference between horizontal coordinates of two points whose vertical coordinates are half of the peak value on the point cloud intensity curve, where the vertical coordinate indicates a point cloud intensity, and the horizontal coordinate indicates an included angle. The average gradient indicates an average value of gradients of a plurality of points on the point cloud intensity curve.

b in FIG. 9 shows three properties (the peak value, the average width, and the average gradient) of the point cloud intensity curve. The processing device 610 determines the average gradient of the point cloud intensity curve, and may select a plurality of points from the point cloud intensity curve based on a sampling granularity determined by the user, to determine an average value of gradients of the plurality of points. For example, the sampling granularity may be performing sampling every 1°. This is not limited in this application. In another embodiment of this application, the sampling granularity may alternatively be performing sampling every 2°.

For example, the processing device 610 one-to-one compares properties of the point cloud intensity curve of the obstacle 420 with properties of the point cloud intensity curve of the non-transparent object to determine the similarity.

For example, the processing device 610 compares a peak value a in the properties of the point cloud intensity curve of the obstacle 420 with a peak value b in the properties of the point cloud intensity curve of the non-transparent object. If the peak value a is greater than or equal to the peak value b plus a first value, it is determined that a similarity between the peak value a and the peak value b is less than or equal to a threshold. The first value may be 10, and the first value may be set based on a user requirement. This is not limited in this application.

The processing device 610 compares an average width a in the properties of the point cloud intensity curve of the obstacle 420 with an average width b in the properties of the point cloud intensity curve of the non-transparent object. If the average width a is less than or equal to the average width b minus a second value, it is determined that a similarity between the average width a and the average width b is less than or equal to a threshold. The second value may be 5, and the second value may be set based on a user requirement. This is not limited in this application.

The processing device 610 compares an average gradient a in the properties of the point cloud intensity curve of the obstacle 420 with an average gradient b in the properties of the point cloud intensity curve of the non-transparent object. If the average gradient a is greater than or equal to the average gradient b plus a third value, it is determined that a similarity between the average gradient a and the average gradient b is less than or equal to a threshold. The third value may be 1, and the third value may be set based on a user requirement. This is not limited in this application.

In conclusion, the processing device 610 performs weighted summation based on the similarities between the peak values, between the average widths, and between the average gradients, to obtain the similarity between the point cloud intensity set of the obstacle 420 and the point cloud intensity set of the non-transparent object.

For example, if the similarity between the peak value a and the peak value b is less than or equal to the threshold, the processing device 610 assigns 0 to the peak value of the point cloud curve of the obstacle. If the similarity between the average width a and the average width b is less than or equal to the threshold, the processing device 610 assigns 0 to the average width of the point cloud curve of the obstacle. If the similarity between the average gradient a and the average gradient b is less than or equal to the threshold, the processing device 610 assigns 0 to the average gradient of the point cloud curve of the obstacle. The processing device 610 determines, based on weights (0.4/0.2/0.4) of the peak values, the average widths, and the average gradients, that the similarities between the properties of the point cloud intensity curve of the obstacle and the properties of the point cloud intensity curve of the non-transparent object are 0, and when the similarities between the properties are less than or equal to a fourth value, determines that the obstacle is the non-transparent object or the transparent object. The fourth value may be 0.2, and the fourth value may be set based on a user requirement. This is not limited in this application.

In this application, the peak value, average width, and average gradient features of the point cloud intensity curve represent a shape and a structure of the entire curve. Therefore, when the processing device 610 performs similarity calculation based on the property of the point cloud intensity curve, better robustness is achieved when noise or local interference is processed. In this way, obtained results are consistent, thereby improving stability and accuracy of recognizing the transparent object.

To resolve the foregoing problem that a neural network model can recognize only the transparent object and cannot confirm a material of the transparent object, the following provides a possible embodiment to recognize the material of the transparent object.

The processing device 610 obtains point cloud intensity sets of a plurality of transparent materials entered by the user. The processing device 610 obtains a similarity between a point cloud intensity set of the transparent object and a point cloud intensity set of each of the plurality of transparent materials, and uses a transparent material for which a similarity is greater than or equal to a second threshold in a plurality of similarities as the material of the transparent object.

In a possible case, the point cloud intensity sets that are obtained by the processing device 610 and that are of the plurality of transparent materials entered by the user may be point cloud intensity curves or properties of a point cloud intensity curve.

In a possible example, the processing device 610 may determine the similarity by using the neural network model, DTW, or the like. The neural network model may be a recurrent neural network (recurrent neural network, RNN), a temporal convolutional network (temporal convolutional network, TCN), or the like.

The material of the transparent object may be transparent plastic, glass, frosted glass, a water tank, or the like.

In this application, a similarity between a point cloud intensity set of the transparent object at different incident angles and a point cloud intensity set of one of the plurality of transparent materials at different angles is greater than or equal to a threshold, that is, optical properties (point cloud intensities at the different incident angles) of the transparent object and the transparent material are consistent. Therefore, it is determined that the material of the transparent object is consistent with the transparent material. The material of the transparent object is determined by using prior data (point cloud intensity sets of the plurality of transparent materials at different angles), to improve processing efficiency of recognizing the transparent object while improving accuracy of recognizing the transparent object. In addition, in comparison with that only the transparent object can be recognized by using a deep learning model, in this application, the material of the transparent object may be further determined based on the prior data, to provide data support for the processing device to avoid the obstacle, and improve an obstacle avoidance success rate.

For the content of determining the similarity in the foregoing embodiment, the following provides two possible implementations.

In a first possible implementation, the processing device 610 calculates a similarity between a point cloud intensity curve of the transparent object and a point cloud intensity curve of each transparent material.

For example, the processing device 610 may determine the similarity between the point cloud intensity curve of the transparent object and the point cloud intensity curve of each material by using the neural network model.

In a second possible implementation, the processing device 610 calculates a similarity between a property of a point cloud intensity curve of the transparent object and a property of a point cloud intensity curve of each material.

For example, the processing device 610 may cluster the property of the point cloud intensity curve of the transparent object and properties of point cloud intensity curves of the plurality of transparent materials, to obtain a clustering result. The clustering result is obtained based on a similarity between the property of the point cloud intensity curve of the transparent object and the properties of the point cloud intensity curves of the plurality of transparent materials, and in the clustering result, a similarity between properties of point cloud intensity curves in a same cluster is greater than or equal to a threshold.

For example, the processing device 610 represents features of the point cloud intensity curve by using a peak value, an average width, and an average gradient of the point cloud intensity curve, presenting properties of the curve across three dimensions. The processing device 610 performs clustering based on the features of the point cloud intensity curve, to improve accuracy of the obtained clustering result.

The processing device 610 may cluster the properties of the point cloud intensity curves by using a K-means algorithm, a hierarchical clustering algorithm, or a density-based clustering algorithm.

In a possible embodiment, in this application, map construction is performed based on the transparent object recognized by the processing device 610 from the scanning region and the material of the transparent object. FIG. 10 is a schematic flowchart of a map construction method according to this application. The map construction method may be performed by the processing device 610, and the map construction method may include the following steps S1010 to 1030.

S1010: The processing device 610 obtains point cloud distance distribution data.

The point cloud distance distribution data indicates a distance between any two locations in a scanning range.

For example, in a process in which the processing device 610 moves normally, moves around the obstacle 420, or moves along a straight line, the processing device 610 may obtain the point cloud distance distribution data in the scanning range.

For descriptions of obtaining the point cloud distance distribution data in the scanning range by the processing device 610, refer to the content of obtaining the detection result of the object by the processing device 610 in S610. Details are not described herein again.

In a possible example, during movement, the processing device 610 emits a light beam to an object, receives a light beam reflected by the object, and may obtain point cloud distance distribution data while obtaining a detection result.

S1020: The processing device 610 generates an occupancy grid map based on the point cloud distance distribution data.

The occupancy grid map indicates whether a grid on a map corresponding to the scanning range is occupied by the obstacle 420, and one grid corresponds to one or more pixels.

In a possible implementation, the processing device 610 determines an area occupied by one grid on the grid map, converts a point cloud in the point cloud distance distribution data into a point on the grid map based on the area of the grid, and calculates distribution of point cloud distances in each grid. The processing device 610 generates the occupancy grid map based on the distribution of the point cloud distances in each grid.

For example, the processing device 610 determines a quantity of small squares (grids) into which the scanning region is divided, that is, determines an area occupied by one grid. If the area occupied by the grid is small, the obtained occupancy grid map has high precision. If the area occupied by the grid is large, the occupancy grid map is obtained quickly. One small square may correspond to one or more pixels, and an area occupied by the small square corresponds to an area in a real environment.

The processing device 610 may convert a distance between points in the point cloud distance distribution data into a distance between points in a coordinate system of the grid map by using a transform matrix. Statistics are collected on distance values of all points in each grid and distribution of the distance values is calculated. The processing device 610 may determine, based on a threshold of the distance values, whether the grid is occupied by an object or whether the grid is idle.

Usually, a grid in which a distance value is less than the threshold is considered as a region occupied by the object, and a grid in which a distance value is greater than the threshold is an idle region.

A binary identifier may be used for the occupied grid, where 1 indicates that the grid is the region occupied by the object, and 0 indicates that the grid is the idle region.

To visualize the occupancy grid map, different colors may be used to represent the occupied region and the idle region. For example, black indicates that the grid is the region occupied by the object, and white indicates that the grid is the idle region.

In a possible implementation, the processing device 610 may generate the occupancy grid map by using Gmapping or Cartographer.

S1030: The processing device 610 merges the occupancy grid map with a transparent object map to obtain a semantic map.

The transparent object map indicates whether the grid on the map corresponding to the scanning range is occupied by a transparent object. The semantic map indicates whether the grid on the map corresponding to the scanning range is occupied by the obstacle and/or the transparent object.

For example, a mark of the grid indicates a material of the transparent object.

The processing device 610 constructs the transparent object map based on the transparent object in the scanning range and point cloud intensity distribution data. The mark of the grid on the transparent object map indicates the material of the transparent object, that is, different marks indicate different materials.

The processing device 610 may fill the grid with different colors, to indicate a material of an object occupying the grid. For example, red indicates glass, and blue indicates frosted glass. The material represented by the color is merely an example, and should not be understood as a limitation on this application. In another embodiment of this application, red may alternatively indicate transparent plastic.

For the content of constructing the transparent object map by the processing device 610, refer to the descriptions of constructing the occupancy grid map in S1020. Details are not described herein again.

In a possible implementation, that the processing device 610 merges the occupancy grid map with the transparent object map to obtain the semantic map includes: The processing device 610 merges a grid on the occupancy grid map with a corresponding grid on the transparent object map to obtain the semantic map.

For example, the processing device 610 merges grids at corresponding locations in the occupancy grid map and the transparent object map to obtain the semantic map.

For example, if a grid on the occupancy grid map is a region occupied by the object, and a grid at a corresponding location in the transparent object map is a region occupied by the glass, the processing device 610 determines that a grid at the location in the semantic map is a region occupied by the glass.

If a grid on the occupancy grid map is black, and a grid at a corresponding location in the transparent object map is red, the processing device 610 determines that a grid at the location in the semantic map is red, which identifies that the grid is occupied by the glass.

In this application, because the processing device 610 can accurately recognize the transparent object and the material of the transparent object in the scanning region, accuracy of the semantic map constructed based on the transparent object and the material of the transparent object in the scanning region is high. Further, when performing navigation based on the semantic map, the processing device 610 may bypass the transparent object and a non-transparent object, thereby improving security of the processing device 610 during movement.

In a possible embodiment, the processing device 610 may visualize the semantic map.

In a possible implementation, the processing device 610 displays the semantic map at a front end. The front end herein may be a display connected to the processing device 610, a display screen of the processing device 610, or the like. This is not limited in this application.

In this application, for a user, the user adjusts the processing device 610 based on the visualized semantic map to meet a user requirement. This helps the processing device 610 more accurately perform a transparent object recognition or map construction process.

In a possible embodiment, the processing device 610 performs navigation based on the occupancy grid map or the semantic map.

For example, the processing device 610 may perform navigation according to a navigation policy based on an occupation status of a grid on the occupancy grid map or the semantic map.

The navigation policy indicates to bypass an occupied grid on the semantic map.

In a possible case, the processing device 610 has different bypass manners based on a transparent object material indicated by the occupied grid on the semantic map.

For example, due to a high risk factor of the glass, an expansion coefficient of the glass is set to be large. To be specific, an occupation range of a grid corresponding to the glass in the semantic map is increased by a multiple of the expansion coefficient, so that the processing device 610 maintains a greater distance from the glass when passing through the glass. Due to a low risk factor of the plastic, an expansion coefficient of the transparent plastic is set to be small. To be specific, occupation of a grid corresponding to the transparent plastic in the semantic map is increased by a multiple of the expansion coefficient, so that the processing device 610 can move closely to the transparent plastic when passing through the transparent plastic.

In this application, because the semantic map records a location of the transparent object, the processing device 610 can accurately avoid the transparent object in the scanning region when performing navigation based on the semantic map, thereby improving the security of the processing device 610 during movement. In addition, the semantic map further indicates the material of the transparent object, so that the processing device 610 can use corresponding bypass policies for different transparent object materials, thereby further ensuring the security of the processing device 610 during movement.

In a possible example, the processing device 610 may further display a moving path of the processing device 610 at the front end. For example, the moving path of the processing device 610 is additionally displayed on the semantic map. This helps the user adjust the processing device 610 to meet the user requirement, so that the moving path of the processing device 610 better meets the user requirement.

It may be understood that, to implement functions in the foregoing embodiments, a compute device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

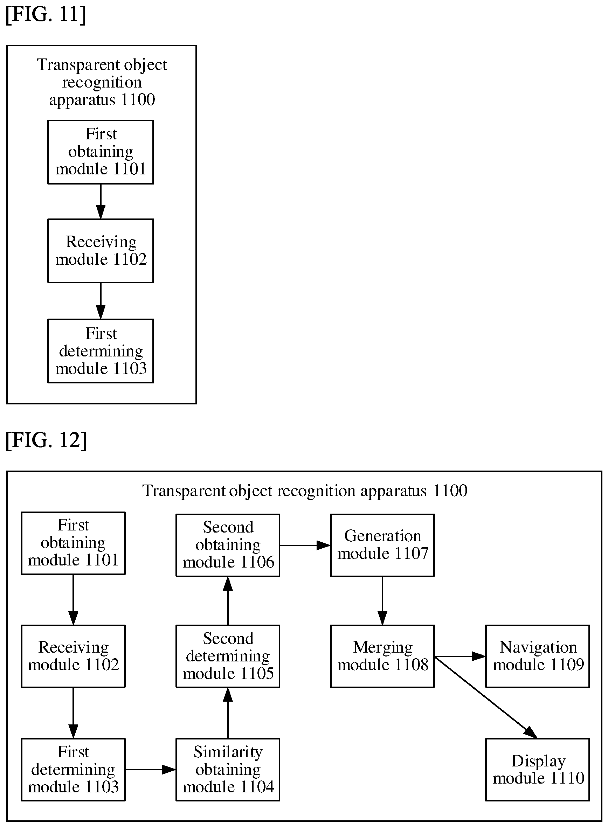

With reference to FIG. 4 to FIG. 10, the foregoing describes in detail the transparent object recognition method provided according to embodiments. With reference to FIG. 11, the following describes a transparent object recognition apparatus provided according to embodiments.

FIG. 11 is a first diagram of a structure of a transparent object recognition apparatus according to this application. The transparent object recognition apparatus may be configured to implement a function of the compute device in the foregoing method embodiments, and therefore can also implement beneficial effects of the foregoing method embodiments. In this embodiment, the transparent object recognition apparatus may be a module (for example, a chip) in the compute device.

As shown in FIG. 11, the transparent object recognition apparatus 1100 includes a first obtaining module 1101, a receiving module 1102, and a first determining module 1103. The transparent object recognition apparatus 1100 is configured to implement functions in the method embodiments shown in FIG. 4 to FIG. 10.

The first obtaining module 1101 is configured to obtain an obstacle in a scanning range.

The receiving module 1102 is configured to receive a detection result of the obstacle in a process in which an included angle formed between a light beam emitted by a processing device and a tangent plane of a reference point on the obstacle changes from a first included angle to a second included angle, where the first included angle is different from the second included angle, and the reference point is an intersection point of the light beam on the obstacle.

The first determining module 1103 is configured to determine a transparent object from the obstacle based on the detection result of the obstacle.

To further implement the functions in the method embodiments shown in FIG. 4 to FIG. 10, this application further provides a transparent object recognition apparatus. FIG. 12 is a second diagram of a structure of a transparent object recognition apparatus according to this application. The transparent object recognition apparatus 1100 further includes a similarity obtaining module 1104, a second determining module 1105, a second obtaining module 1106, a generation module 1107, a merging module 1108, a navigation module 1109, and a display module 1110.

The similarity obtaining module 1104 is configured to obtain a similarity between a point cloud intensity set of the transparent object and a point cloud intensity set of each of a plurality of transparent materials.

The second determining module 1105 is configured to use a transparent material for which a similarity is greater than or equal to a second threshold in a plurality of similarities as a material of the transparent object.

The second obtaining module 1106 is configured to obtain point cloud distance distribution data, where the point cloud distance distribution data indicates a distance between any two locations in the scanning range.

The generation module 1107 is configured to generate an occupancy grid map based on the point cloud distance distribution data, where the occupancy grid map indicates whether a grid on a map corresponding to the scanning range is occupied by an obstacle, and one grid corresponds to one or more pixels.

The merging module 1108 is configured to merge the occupancy grid map with a transparent object map to obtain a semantic map. The transparent object map indicates whether the grid on the map corresponding to the scanning range is occupied by the transparent object. The semantic map indicates whether the grid on the map corresponding to the scanning range is occupied by the obstacle and/or the transparent object, and a mark of the grid indicates the material of the transparent object.

The navigation module 1109 is configured to perform navigation based on the semantic map according to a navigation policy, where the navigation policy indicates to bypass an occupied grid on the semantic map.

The display module 1110 is configured to display the semantic map.

It should be noted that the processing device 610 in the foregoing embodiments may correspond to the transparent object recognition apparatus 1100, and may correspond to a corresponding body that is in FIG. 4 to FIG. 10 and that performs the method according to embodiments of this application. In addition, operations and/or functions of modules in the transparent object recognition apparatus 1100 are respectively used to implement corresponding procedures of the methods in the corresponding embodiments in FIG. 4 to FIG. 10. For brevity, details are not described herein again.

In addition, the apparatuses shown in FIG. 11 and FIG. 12 may alternatively be implemented by a communication device. The communication device herein may be the compute device in the foregoing embodiments. Alternatively, when the communication device is a chip or a chip system used in the compute device, the apparatuses may be implemented by the chip or the chip system.

When the transparent object recognition apparatus is implemented by hardware, the hardware may be implemented by a processor or a chip. The following uses an example in which the hardware is the chip for description. The chip includes a processor, configured to implement a function of the processing device 610 in the foregoing method. In a possible design, the chip further includes a power supply circuit, configured to supply power to the processor. The chip may directly include a chip, or may include a chip and another discrete device.

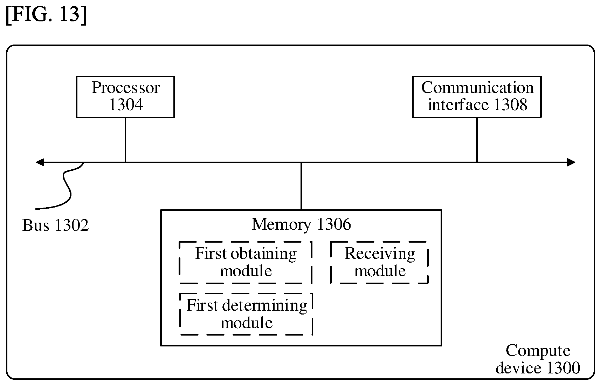

An embodiment of this application provides a compute device. FIG. 13 is a diagram of a structure of a compute device according to this application. The compute device may be used in the computer system shown in FIG. 1.

The compute device 1300 may be specifically an electronic device with a computing capability, for example, a mobile phone, a tablet computer, a television (which may also be referred to as a smart television, a smart screen, or a large-screen device), a notebook computer, an ultra-mobile personal computer (ultra-mobile personal computer, UMPC), a handheld computer, a netbook, a personal digital assistant (personal digital assistant, PDA), a wearable electronic device (for example, a smart watch, a smart band, or smart glasses), a vehicle-mounted device, a virtual reality device, or a server; or a simultaneous localization and mapping (simultaneous localization and mapping, SLAM) device, for example, a car, a robot, or an uncrewed aerial vehicle.

As shown in FIG. 13, the compute device 1300 includes a bus 1302, a processor 1304, a memory 1306, and a communication interface 1308. The processor 1304, the memory 1306, and the communication interface 1308 communicate with each other through the bus 1302. The compute device 1300 may be a server or a terminal device. It should be noted that a quantity of processors and a quantity of memories in the processing device are not limited in this application.

The bus 1302 may be, but is not limited to, a peripheral component interconnect express (peripheral component interconnect express, PCIe) bus, a universal serial bus (universal serial bus, USB), an inter-integrated circuit (inter-integrated circuit, I2C) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), a controller area network (controller area network, CAN), or the like. The bus 1302 may be classified into an address bus, a data bus, a control bus, or the like. For ease of representation, the bus is represented by using only one line in FIG. 13. However, it does not mean that there is only one bus or only one type of bus. The bus 1302 may include a path for information transmission between components (for example, the memory 1306, the processor 1304, and the communication interface 1308) of the compute device 1300.

The processor 1304 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1306 may include a volatile memory (volatile memory), for example, a random access memory (random access memory, RAM). The memory 1306 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1306 stores executable program code, and the processor 1304 executes the executable program code to separately implement functions of the first obtaining module, the receiving module, and the first determining module, so as to implement the transparent object recognition method. In other words, the memory 1306 stores instructions used to execute the transparent object recognition method.

The communication interface 1308 implements communication between the compute device 1300 and another device or a communication network by using a transceiver module, for example, but not limited to a network interface card or a transceiver.

In a possible embodiment, the compute device 1300 may further include a lidar or a moving component. The processor 1304, the memory 1306, the communication interface 1308, the lidar, and the moving component are connected through the bus 1302.

The lidar is a sensor, and is configured to measure and sense distance and geometric information of an ambient environment. The lidar may include a rotating lidar (rotating LiDAR). The rotating lidar obtains point cloud data of the environment in a rotating scanning manner. The rotating lidar usually includes a rotating laser beam and a receiver, and can implement panoramic scanning in a horizontal direction. The rotating lidar has large coverage and high-density point cloud output, and is applicable to tasks such as three-dimensional reconstruction, map construction, and obstacle detection.

Solid-state lidar (solid-state LiDAR): The solid-state lidar uses a solid-state optoelectronic device (for example, a solid-state laser and a solid-state receiver) to transmit and receive laser light. Compared with the rotating lidar, the solid-state lidar does not need mechanical rotation, and has a smaller size, higher reliability, and lower power consumption. However, due to limited transmitting and receiving angles of the solid-state lidar, a data collection range of the solid-state lidar is small.

3D TOF lidar (time-of-flight LiDAR): The 3D TOF lidar uses round-trip time of a light pulse to measure a distance between an object and the radar. The 3D TOF lidar implements ranging by sending a short pulse light beam and measuring time for the light beam to return to the radar. The 3D TOF lidar has features of high-speed ranging and high precision, and is applicable to applications in fast sensing and a dynamic environment.

Modulated continuous wave lidar (modulated continuous wave LiDAR): The modulated continuous wave lidar performs ranging by using a modulated continuous wave light beam. The modulated continuous wave lidar encodes distance information by changing a frequency or an amplitude of light, and implements measurement through decoding of a receiver. The modulated continuous wave lidar is applicable to long-distance measurement and high-speed moving object detection.

The moving component may include a motor, a wheel set, a continuous track, or the like, to implement movement of the compute device 1300.

An embodiment of this application further provides a computer program product including instructions. The computer program product may be software or a program product that includes instructions and that can run on a processing device or be stored in any usable medium. When the computer program product runs on at least one processing device, the at least one processing device is enabled to perform the transparent object recognition method.

An embodiment of this application further provides a computer-readable storage medium. The computer-readable storage medium may be any usable medium that can be stored in a processing device, or a data storage device like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the processing device to perform the transparent object recognition method.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device like a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD).

The foregoing descriptions are merely specific implementations of this application, but are not intended to limit the protection scope of this application. Various equivalent modifications or replacements readily figured out by a person skilled in the art within the technical scope disclosed in this application shall fall within the protection scope of this application. Therefore, the protection scope of this application shall be subject to the protection scope of the claims.

## Claims

1. A transparent object recognition method, wherein the method is applied to a processing device, and the method comprises:
obtaining an obstacle in a scanning range;
receiving a detection result of the obstacle in a process in which an included angle formed between a light beam emitted by the processing device and a tangent plane of a reference point on the obstacle changes from a first included angle to a second included angle, wherein the first included angle is different from the second included angle, and the reference point is an intersection point of the light beam on the obstacle; and
determining a transparent object from the obstacle based on the detection result of the obstacle.

2. The method according to claim 1, wherein that the included angle formed between the light beam emitted by the processing device and the tangent plane of the reference point on the obstacle changes from the first included angle to the second included angle indicates that the included angle between the light beam emitted by the processing device and the tangent plane of the reference point changes from the first included angle to the second included angle in a process in which the processing device moves around the obstacle.

3. The method according to claim 2, wherein that the processing device moves around the obstacle comprises: the processing device moves clockwise around the obstacle, or the processing device moves counterclockwise around the obstacle.

4. The method according to claim 1, wherein that the included angle formed between the light beam emitted by the processing device and the tangent plane of the reference point on the obstacle changes from the first included angle to the second included angle indicates that the included angle between the light beam emitted by the processing device and the tangent plane of the reference point changes from the first included angle to the second included angle in a process in which the processing device moves along a straight line.

5. The method according to any one of claims 1 to 4, wherein the detection result indicates a point cloud intensity set at a plurality of different included angles, wherein the point cloud intensity set comprises a plurality of point cloud intensities, any one of the plurality of point cloud intensities indicates an intensity of reflecting a light beam at an included angle by the reference point on the obstacle, and the included angle is between the first included angle and the second included angle.

6. The method according to claim 5, wherein the determining the transparent object from the obstacle based on the detection result of the obstacle comprises:
obtaining a similarity between the point cloud intensity set of the obstacle and a point cloud intensity set of a non-transparent object; and
determining an obstacle for which a similarity is less than or equal to a first threshold as the transparent object.

7. The method according to claim 5 or 6, wherein the point cloud intensity set at the plurality of different included angles is a point cloud intensity curve, and the point cloud intensity curve indicates a correspondence between a point cloud intensity and an included angle.

8. The method according to claim 7, wherein the similarity for the point cloud intensity
set indicates a similarity for a property of the point cloud intensity curve;
the property of the point cloud intensity curve comprises one or more of a peak value, an average width, and an average gradient;
the average width indicates a difference between horizontal coordinates of two points whose vertical coordinates are half of the peak value on the point cloud intensity curve, wherein the vertical coordinate indicates a point cloud intensity, and the horizontal coordinate indicates an included angle; and
the average gradient indicates an average value of gradients of a plurality of points on the point cloud intensity curve.

9. The method according to any one of claims 5 to 8, wherein the method further comprises:
obtaining a similarity between a point cloud intensity set of the transparent object and a point cloud intensity set of each of a plurality of transparent materials; and
using a transparent material for which a similarity is greater than or equal to a second threshold in a plurality of similarities as a material of the transparent object.

10. The method according to claim 9, wherein the method further comprises:
obtaining point cloud distance distribution data, wherein the point cloud distance distribution data indicates a distance between any two locations in the scanning range;
generating an occupancy grid map based on the point cloud distance distribution data, wherein the occupancy grid map indicates whether a grid on a map corresponding to the scanning range is occupied by an obstacle, and one grid corresponds to one or more pixels; and
merging the occupancy grid map with a transparent object map to obtain a semantic map, wherein the transparent object map indicates whether the grid on the map corresponding to the scanning range is occupied by the transparent object, the semantic map indicates whether the grid on the map corresponding to the scanning range is occupied by the obstacle and/or the transparent object, and a mark of the grid indicates the material of the transparent object.

11. The method according to claim 10, wherein the method further comprises:
performing navigation based on the semantic map according to a navigation policy, wherein the navigation policy indicates to bypass an occupied grid on the semantic map.

12. The method according to claim 10, wherein the method further comprises:
displaying the semantic map.

13. A transparent object recognition apparatus, wherein the apparatus is used in a
processing device, and the apparatus comprises a first obtaining module, a receiving module, and a first determining module;
the first obtaining module is configured to obtain an obstacle in a scanning range; the receiving module is configured to receive a detection result of the obstacle in a process in which an included angle formed between a light beam emitted by the processing device and a tangent plane of a reference point on the obstacle changes from a first included angle to a second included angle, wherein the first included angle is different from the second included angle, and the reference point is an intersection point of the light beam on the obstacle; and
the first determining module is configured to determine a transparent object from the obstacle based on the detection result of the obstacle.

14. The apparatus according to claim 13, wherein that the included angle formed between the light beam emitted by the processing device and the tangent plane of the reference point on the obstacle changes from the first included angle to the second included angle indicates that the included angle between the light beam emitted by the processing device and the tangent plane of the reference point changes from the first included angle to the second included angle in a process in which the processing device moves around the obstacle.

15. The apparatus according to claim 14, wherein that the processing device moves around the obstacle comprises: the processing device moves clockwise around the obstacle, or the processing device moves counterclockwise around the obstacle.

16. The apparatus according to claim 13, wherein that the included angle formed between the light beam emitted by the processing device and the tangent plane of the reference point on the obstacle changes from the first included angle to the second included angle indicates that the included angle between the light beam emitted by the processing device and the tangent plane of the reference point changes from the first included angle to the second included angle in a process in which the processing device moves along a straight line.

17. The apparatus according to any one of claims 13 to 16, wherein the detection result indicates a point cloud intensity set at a plurality of different included angles, wherein the point cloud intensity set comprises a plurality of point cloud intensities, any one of the plurality of point cloud intensities indicates an intensity of reflecting a light beam at an included angle by the reference point on the obstacle, and the included angle is between the first included angle and the second included angle.

18. The apparatus according to claim 17, wherein the first determining module is specifically configured to: obtain a similarity between the point cloud intensity set of the obstacle and a point cloud intensity set of a non-transparent object, and determine an obstacle for which a similarity is less than or equal to a first threshold as the transparent object.

19. The apparatus according to claim 17 or 18, wherein the point cloud intensity set at the plurality of different included angles is a point cloud intensity curve, and the point cloud intensity curve indicates a correspondence between a point cloud intensity and an included angle.

20. The apparatus according to claim 19, wherein the similarity for the point cloud intensity set indicates a similarity for a property of the point cloud intensity curve;
the property of the point cloud intensity curve comprises one or more of a peak value, an average width, and an average gradient;
the average width indicates a difference between horizontal coordinates of two points whose vertical coordinates are half of the peak value on the point cloud intensity curve, wherein the vertical coordinate indicates a point cloud intensity, and the horizontal coordinate indicates an included angle; and
the average gradient indicates an average value of gradients of a plurality of points on the point cloud intensity curve.

21. The apparatus according to any one of claims 17 to 20, wherein the transparent object recognition apparatus further comprises a similarity obtaining module and a second determining module;
the similarity obtaining module is configured to indicate to obtain a similarity between a point cloud intensity set of the transparent object and a point cloud intensity set of each of a plurality of transparent materials; and
the second determining module is configured to use a transparent material for which a similarity is greater than or equal to a second threshold in a plurality of similarities as a material of the transparent object.

22. The apparatus according to claim 21, wherein the transparent object recognition apparatus further comprises a second obtaining module, a generation module, and a merging module;
the second obtaining module is configured to obtain point cloud distance distribution data, wherein the point cloud distance distribution data indicates a distance between any two locations in the scanning range;
the generation module is configured to generate an occupancy grid map based on the point cloud distance distribution data, wherein the occupancy grid map indicates whether a grid on a map corresponding to the scanning range is occupied by an obstacle, and one grid corresponds to one or more pixels; and
the merging module is configured to merge the occupancy grid map with a transparent object map to obtain a semantic map, wherein the transparent object map indicates whether the grid on the map corresponding to the scanning range is occupied by the transparent object, the semantic map indicates whether the grid on the map corresponding to the scanning range is occupied by the obstacle and/or the transparent object, and a mark of the grid indicates the material of the transparent object.

23. The apparatus according to claim 22, wherein the transparent object recognition apparatus further comprises a navigation module; and
the navigation module is configured to perform navigation based on the semantic map according to a navigation policy, wherein the navigation policy indicates to bypass an occupied grid on the semantic map.

24. The apparatus according to claim 22, wherein the transparent object recognition apparatus further comprises a display module; and
the display module is configured to display the semantic map.

25. A compute device, comprising a processor and a memory, wherein
the processor is configured to execute instructions stored in the memory, to enable the compute device to perform the method according to any one of claims 1 to 12.
